# EUROPÄISCHE PATENTSCHRIFT

(11) **EP 2 488 599 B1**
(45) Veröffentlichungstag und Bekanntmachung des Hinweises auf die Patenterteilung: **02.04.2014**
(21) Anmeldenummer: 10763701.9
(22) Anmeldetag: 11.10.2010
(51) Int. Cl.: C09K 8/584, B01F 17/00

(54) **VERFAHREN ZUR TERTIÄREN ERDÖLFÖRDERUNG UNTER VERWENDUNG VON TENSIDMISCHUNGEN**
PROCESS FOR TERTIARY MINERAL OIL PRODUCTION USING SURFACTANT MIXTURES
PROCÉDÉ D'EXTRACTION DE PÉTROLE TERTIAIRE AU MOYEN DE MÉLANGES DE TENSIOACTIFS

(30) Priorität: 14.10.2009 EP 09173027
(43) Veröffentlichungstag der Anmeldung: 22.08.2012
(73) Patentinhaber: BASF SE, 67056 Ludwigshafen (DE)
(72) Erfinder: BITTNER, Christian, 64625 Bensheim (DE); OETTER, Günter, 67227 Frankenthal (DE); TINSLEY, Jack, 68161 Mannheim (DE); SPINDLER, Christian, 67061 Ludwigshafen (DE); ALVAREZ JÜRGENSON, Gabriela, 68163 Mannheim (DE); VOGEL, Sophie, 68199 Mannheim (DE)
(86) Internationale Anmeldenummer: PCT/EP2010/065154
(87) Internationale Veröffentlichungsnummer: WO 2011/045254

(56) Entgegenhaltungen:
- WO-A1-2009/050179
- WO-A1-2009/124922
- WO-A1-2009/130141
- GB-A- 2 168 095
- US-A- 3 811 504
- US-A- 4 293 428

## Beschreibung

Die Erfindung betrifft ein Verfahren zur Erdölförderung, bei dem man eine wässrige Tensidformulierung, welche mindestens ein Propoxygruppen umfassendes Alkylpolyalkoxysulfat sowie mindestens ein weiteres Tensid umfasst, durch Injektionsbohrungen in eine Erdöllagerstätte einpresst und der Lagerstätte durch Produktionsbohrungen Rohöl entnimmt. Bei dem Verfahren kann es sich insbesondere um Winsor Typ III - Mikroemulsionsfluten handeln.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Neben Erdöl, inklusive Anteilen von Erdgas enthält eine Lagerstätte mehr oder weniger stark salzhaltiges Wasser.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche.

Nach der primären Förderung kommt daher die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst, um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her.

Mittels primärer und sekundärer Förderung sind im Regelfalle nur ca. 30 bis 35 % der in der Lagerstätte vorhandenen Erdölmenge zu fördern.

Es ist bekannt, die Erdölausbeute durch Maßnahmen der tertiären Ölförderung weiter zu steigern. Eine Übersicht zur tertiären Ölförderung findet sich beispielsweise im Journal of Petroleum Science and Engineering 19 (1998) 265-280. Zur tertiären Ölförderung gehören Wärmeverfahren, bei denen Heißwasser oder Heißdampf in die Lagerstätte eingepresst wird. Hierdurch wird die Viskosität des Öls herabgesetzt. Als Flutmedium können auch Gase wie CO₂ oder Stickstoff Einsatz finden.

Zur tertiären Erdölförderung gehören weiterhin Verfahren, bei denen man geeignete Chemikalien als Hilfsmittel zur Ölförderung einsetzt. Mit diesen lässt sich die Situation gegen Ende des Wasserflutens beeinflussen und dadurch auch bis dahin in der Gesteinformation festgehaltenes Erdöl fördern.

Beispielsweise kann man die Grenzflächenspannung σ zwischen dem Erdöl und der wässrigen Phase durch den Zusatz von geeigneten Tensiden absenken. Diese Technik ist auch als "Tensidfluten" bekannt. Hierzu eignen sich insbesondere Tenside, welche σ auf Werte von < 10⁻² mN/m (ultralow interfacial tension) herabsetzen können. Auf diese Art und Weise lassen sich die Öltröpfchen in ihrer Form verändern und durch das Flutwasser durch die Kapillaröffnungen hindurchzwängen.

Die Öltröpfchen können sich anschließend zu einer kontinuierlichen Ölbank vereinigen. Dies hat zweierlei Vorteile: Zum einen können beim Voranschreiten der kontinuierlichen Ölbank durch neues poröses Gestein, die sich dort befindlichen Öltropfen mit der Bank verschmelzen. Weiterhin wird durch die Vereinigung der Öltropfen zu einer Ölbank die Öl-Wasser-Grenzfläche deutlich verringert und somit nicht mehr benötigtes Tensid freigesetzt. Das freigesetzte Tensid kann danach in der Formation verbliebene Öltropfen mobilisieren.

Die Anforderungen an Tenside für die tertiäre Erdölförderungen unterscheiden sich deutlich von Anforderungen an Tenside für andere Anwendungen: Geeignete Tenside für die tertiäre Erdölförderung sollen die Grenzflächenspannung zwischen Wasser und Öl (üblicherweise ca. 20 mN/m) auf besonders niedrige Werte von weniger als 10⁻² mN/m reduzieren, um eine ausreichende Mobilisierung des Erdöls zu ermöglichen. Dies muss bei den üblichen Lagerstättentemperaturen von ca. 15°C bis ca. 130°C und in Gegenwart von stark salzhaltigem Wasser, insbesondere auch in Gegenwart von hohen Anteilen von Calcium- und/oder Magnesiumionen erfolgen; die Tenside müssen also auch in stark salzhaltigem Lagerstättenwasser löslich sein.

Zum Erfüllung dieser Anforderungen sind bereits häufig Mischungen von Tensiden vorgeschlagen worden, insbesondere Mischungen aus anionischen und nichtionischen Tensiden.

US 3,811,505 offenbart eine Mischung aus einem anionischen und einem nichtionischen Tensid zum Einsatz in Lagerstätten, deren Lagerstättenwasser 0,5 bis 0,9 Gew. % mehrwertige Ionen enthält. Bei den anionischen Tensiden handelt es sich um Alkylsulfonate bzw. Alkylphosphate mit jeweils 5 bis 25 C-Atomen oder um Alkylarylsulfonate bzw. Alkylarylphosphate, deren Alkylrest jeweils 5 bis 25 C-Atome aufweist. Bei den nichtionischen Tensiden handelt es sich um polyethoxylierte Alkylphenole, welche 6 bis 20 Ethoxygruppen aufweisen und deren Alkylrest 5 bis 20 C-Atome aufweist oder um polyethoxylierte aliphatische Alkohole mit 6 bis 20 C-Atomen und 6 bis 20 Ethoxygruppen.

US 3,811,504 offenbart eine Mischung aus 2 verschiedenen anionischen Tensiden und einem nichtionischen Tensid zum Einsatz in Lagerstätten, deren Lagerstättenwasser 0,15 bis 1,2 % Calcium- und Magnesiumionen enthält. Bei dem ersten anionischen Tensid handelt es sich um Alkyl- oder Alkylarylsulfonate, bei dem zweiten um Alkylpolyethoxysulfate. Bei den nichtionischen Tensiden kann es sich um polyethoxylierte Alkylphenole, welche 6 bis 20 Ethoxygruppen aufweisen und deren Alkylrest 5 bis 20 C-Atome aufweist, oder um polyethoxylierte aliphatische Alkohole mit 6 bis 20 C-Atomen und 6 bis 20 Ethoxygruppen handeln.

US 4,077,471 offenbart eine Tensidmischung zum Einsatz in einer Formation, deren Lagerstättenwasser einen Salzgehalt von 7 bis 22 % aufweist. Die Mischung umfasst ein wasserlösliches Alkylpolyalkoxyalkylsulfonat oder Alkylarylpolyalkoxyalkylsulfonat sowie ein wasserunlösliches nichtionisches Tensid aus einem ethoxylierten aliphatischen Alkohol oder einem ethoxylierten, alkylsubstituierten aromatischen Alkohol, wobei die Kohlenwasserstoffgruppen jeweils 8 bis 24 C-Atome aufweisen und die Anzahl der Ethoxygruppen 1 bis 20 beträgt.

US 4,293,428 offenbart ein Verfahren zur Erdölförderung, bei dem man Tenside der allgemeinen Formel R-(PO)ₘ(EO)ₙYM in eine Erdölformation injiziert, wobei R für einen aliphatischen Kohlenwasserstoffrest oder einen aliphatisch substituierten Phenylrest steht, PO für eine Propoxygruppe, EO für eine Ethoxygruppe, Y für eine Sulfat-, Sulfonat-, Phosphat- oder Carboxylatgruppe, M für ein Kation und n und m jeweils für eine Zahl von 1 bis 10. Die Schrift enthält keine Hinweise auf die Herstellung oder Polydispersität der Tenside.

GB 2 168 095 A offenbart ein Verfahren zur Erdölförderung, bei dem man propoxylierte Tenside der allgemeinen Formel R-(PO)ₓ-R'-SO₃M oder R-(PO)ₓOSO₃M in eine Erdölformation mit einer Gesamtsalinität von 20000 ppm bis 80000 ppm injiziert. In obiger Formel steht R für einen aliphatischen oder aliphatisch-aromatischen Kohlenwasserstoffrest mit 10 bis 20 Kohlenstoffatomen, x für eine Zahl von 2 bis 15 und R' für eine Alkylengruppe mit 1 bis 5 Kohelnstoffatomen. Die Schrift enthält keine Hinweise auf die Herstellung oder Polydispersität der Tenside.

US 2006/0185845 A1 offenbart die Verwendung einer Mischung aus mindestens einem aliphatischen anionischen Tensid und einem verzweigten aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5.

US 2006/0189486 A1 offenbart die Verwendung einer Mischung aus mindestens einem verzweigten aliphatischen anionischen Tensid und einem aliphatischen nichtionischen Tensid für die Erdölförderung. Der verzweigte aliphatische Rest weist bevorzugt 10 bis 24 C-Atome auf und der Verzweigungsgrad beträgt 0,7 bis 2,5

WO 2009/050179 A1 offenbart bestimmte Polyethersulfonate und deren Verwendung für verschiedene Zwecke, darunter die tertiäre Erdölförderung. Als hydrophobe Gruppe umfassen die Polyethersulfonate einen Kohlenwasserstoffrest mit 6 bis 30 Kohlenstoffatomen. Die Polyethersulfonate können mit verschiedenen ionischen und nichtionischen Tensiden kombiniert werden.

Unsere ältere Anmeldung WO 2009/124922 offenbart Tenside der allgemeinen Formel iso-C₁₇H₃₅-X, wobei es sich bei X um eine polare Gruppe und bei iso-C₁₇H₃₅ um einen Alkylrest mit einem Verzweigungsgrad von 2,8 bis 3,7 handelt. Die Schrift offenbart nichtionische Tenside der allgemeinen Formel iso-C₁₇H₃₅-O-(CH₂CH(CH₃)O)ₙ(CH₂CH₂O)ₘ-H, wobei n für 0 bis 15, m für 1 bis 20, bevorzugt 5 bis 14 und die Summe n+m für 1 bis 35, bevorzugt 2 bis 20 steht. Die Alkoxylierung der Tenside kann mittels saurer Katalyse, KOH-Katalyse oder Katalyse mittels DMC-Katalysatoren vorgenommen werden. Die Alkoxylate können durch Sulfatierung in die entsprechenden Sulfate überführt werden.

In einer bevorzugten Ausführungsform des Tensidflutens sollen die Tenside mit der Wasser- und der Ölphase eine Mikroemulsion vom Winsor Typ III bilden. Bei einer Mikroemulsion (Winsor Typ III) handelt es sich nicht um eine Emulsion mit besonders kleinen Tröpfchen, sondern um eine thermodynamisch stabile, flüssige Mischung von Wasser, Öl und Tensiden, welche eine sehr niedrige Grenzflächenspannung und in der Regel eine sehr niedrige Viskosität aufweist. Ihre drei Vorteile sind, dass
- dadurch eine sehr niedrige Grenzflächenspannung σ zwischen Erdöl und wässriger Phase erreicht wird,
- sie in der Regel eine sehr niedrige Viskosität aufweist und dadurch nicht in einer porösen Matrix gefangen wird,
- sie schon bei kleinsten Energieeinträgen entsteht und über einen unendlich langen Zeitraum stabil bleiben kann (klassische Emulsionen benötigen hingegen höhere Scherkräfte, welche im Reservoir überwiegend nicht auftauchen, und sind nur kinetisch stabilisiert).

Die Winsor III- Mikroemulsion steht mit überschüssigem Wasser und überschüssigem Öl im Gleichgewicht. Unter diesen Bedingungen der Mikroemulsionsausbildung belegen die Tenside die Öl-Wasser-Grenzfläche und erniedrigen die Grenzflächenspannung σ.

Da Winsor III - Mikroemulsionen im Vergleich zu anderen Emulsionstypen besonders niederviskos sind, können sie im Flutprozess durch das poröse Lagerstättengestein. Konventionelle Emulsionen hingegen können in der porösen Matrix hängen bleiben und diese verstopfen. Beim Winsor Typ III Mikroemulsionsfluten handelt es sich folglich um ein äußerst effizientes Verfahren und im Unterschied zu einem Emulsionsflutverfahren bedarf es deutlich weniger Tensid. Beim Mikroemulsionfluten werden üblicherweise die Tenside wahlweise zusammen mit Cosolventien und/oder basischen Salzen (optional in Gegenwart von Chelatbildnern) injiziert. Nachfolgend wird eine Lösung aus verdickendem Polymer zur Mobilitätskontrolle injiziert. Eine weitere Variante ist die Injektion einer Mischung aus verdickendem Polymer sowie Tensiden, Cosolventien und/oder basischen Salzen (optional mit Chelatbildner) und nachfolgend eine Lösung aus verdickendem Polymer zur Mobilitätskontrolle. Diese Lösungen sollten in der Regel klar sein, um Verstopfungen des Reservoirs zu vermeiden.

Die Anforderungen an Tenside für die tertiäre Erdölförderung unterscheiden sich deutlich von Anforderungen an Tenside für andere Anwendungen: Geeignete Tenside für die tertiäre Ölförderung sollen die Grenzflächenspannung zwischen Wasser und Öl (üblicherweise ca. 20 mN/m) auf besonders niedrige Werte von weniger als 10⁻²mN/m reduzieren, um eine ausreichende Mobilisierung des Erdöls zu ermöglichen. Dies muss bei den üblichen Lagerstättentemperaturen von ca. 15°C bis 130°C und in Gegenwart von stark salzhaltigem Wasser, insbesondere auch in Gegenwart von hohen Anteilen von Kalzium- und/oder Magnesiumionen erfolgen; die Tenside müssen also auch in stark salzhaltigem Lagerstättenwasser löslich sein.

Um ein optimales Ergebnis zu erzielen, sollte der Anteil der Mikroemulsion im System Wasser-Mikroemulsion-Öl bei definierter Tensidmenge naturgemäß möglichst groß sein. Die Einsatzparameter, wie beispielsweise Art, Konzentration und das Mischungsverhältnis der eingesetzten Tenside zueinander werden daher vom Fachmann an die in einer gegebenen Erdölformation vorherrschenden Bedingungen (Temperatur, Salzgehalt) angepasst.

Die Grenzflächenspannung sollte möglichst niedrig sein und die Trennung in die Phasen der Mikroemulsion sollte möglichst rasch erfolgen.

Aufgabe der Erfindung war es, Tensidmischungen bereit zu stellen, welche diese Anforderungen erfüllen.

Dem entsprechend wurde ein Verfahren zur Erdölförderung gefunden, bei man eine wässrige Tensidformulierung umfassend mindestens ein anionisches Tensid und mindestens ein weiteres Tensid durch mindestens eine Injektionsbohrung in eine Erdöllagerstätte einpresst und der Lagerstätte durch mindestens eine Produktionsbohrung Rohöl entnimmt, wobei die Tensidmischung mindestens umfasst
(A) mindestens ein Tensid (A) der allgemeinen Formel

   R¹-O-(CH₂-CH-(CH₃)O)ₓ-(CH₂-CH₂O)_{y}-SO₃M,

   wobei
   - R¹ für einen geradkettigen oder verzweigten aliphatischen und/oder aromatischen Kohlenwasserstoffrest mit 8 bis 32 Kohlenstoffatomen,
   - M für H⁺ und/oder ein k-wertiges Gegenion ¹/ₖ Y^{k+},
   - x für eine Zahl von 4 bis 30, und
   - y für eine Zahl von 0 bis 30 steht,
   - und die Summe x + y ≤ 50 ist,
   wobei das Tensid (A) durch Sulfatierung eines alkoxylierten Alkohols R¹-O-(CH₂-CH-(CH₃)O)ₓ-(CH₂-CH₂O)_{y}-H mit einer Polydispersität M_{w}/Mₙ < 1,05, erhältlich durch Alkoxylierung eines Alkohol R₁-OH unter Verwendung von Doppelmetallcyanidkatalysatoren erhältlich ist, und
(B) mindestens ein davon verschiedenes Tensid (B) der allgemeinen Formel R²-Y, wobei R² für einen geradkettigen oder verzweigten aliphatischen und/oder aromatischen Kohlenwasserstoffrest mit 8 bis 32 Kohlenstoffatomen steht und Y für eine hydrophile Gruppe,
wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

Weiterhin wurde eine Tensidmischung für die Erdlölförderung gefunden, welche die beiden Tenside (A) und (B) enthält.

Zu der Erfindung ist im Einzelnen das Folgende auszuführen:
Bei dem erfindungsgemäßen Verfahren zur Erdölförderung wird eine wässrige Formulierung eingesetzt, welche mindestens ein Tensid (A) sowie mindestens ein davon verschiedenes Tensid (B) enthält. Sie kann darüber hinaus noch weitere Tenside und/oder andere Komponenten umfassen.

### Tenside (A)

Die Tenside (A) weisen die allgemeine Formel R¹-O-(CH₂-CH-(CH₃)O)ₓ-(CH₂-CH₂O)_{y}-SO₃M (I) auf. Es können ein oder auch mehrere verschiedene Tenside (A) der Formel (I) eingesetzt werden.

Bei dem Rest R¹ handelt es sich um einen geradkettigen oder verzweigten, aliphatischen und/oder aromatischen Kohlenwasserstoffrest mit 8 bis 32 Kohlenstoffatomen, bevorzugt 9 bis 22, besonders bevorzugt 9 bis 18 und ganz besonders bevorzugt 10 bis 17 Kohlenstoffatomen.

Bevorzugt handelt es sich um einen geradkettigen oder verzweigten aliphatischen Kohlenwasserstoffrest, insbesondere einen geradkettigen oder verzweigten aliphatischen Kohlenwasserstoffrest mit 9 bis 18 Kohlenstoffatomen.

Ein verzweigter aliphatischer Kohlenwasserstoffrest weist in der Regel einen Verzweigungsgrad von 0,1 bis 4,5, bevorzugt 1 bis 3,5 auf. Der Begriff "Verzweigungsgrad" wird hierbei in prinzipiell bekannter Art und Weise als die Zahl der Methylgruppen in einem Molekül des Alkohols abzüglich 1 definiert. Der mittlere Verzweigungsgrad ist der statistische Mittelwert der Verzweigungsgrade aller Moleküle einer Probe.

In der obigen Formel (I) steht x für eine Zahl von 4 bis 30, bevorzugt 6 bis 18 und ganz besonders bevorzugt 7 bis 14 und y steht für eine Zahl von 0 bis 30, bevorzugt 0 bis 20 und besonders bevorzugt 0 bis 10.

Hierbei ist die Summe x + y ≤ 50, bevorzugt ≤ 40, besonders bevorzugt ≤ 30 und beispielsweise ≤ 25. Bevorzugt ist weiterhin x > y.

Für den Fachmann auf dem Gebiet der Polyalkoxylate ist klar, dass es sich bei den Zahlen x um Mittelwerte über alle Moleküle eine Probe handelt, weil bei der Alkoxylierung von Alkoholen mit Alkylenoxiden eine gewisse Verteilung von Kettenlängen erhalten wird.

Es handelt sich, für den Fall, dass y > 0 ist, um Tenside mit Blockstruktur, wobei die Blöcke in der in Formel (I) gezeigten Reihenfolge angeordnet sind. Für den Fall y = 0 weist das Tensid nur einen Polypropylenoxidblock auf.

In Formel (I) steht M für H⁺ oder ein k-wertiges Gegenion ¹/ₖ Y^{k+}. k steht hierbei für die Ladung des Gegenions. Bevorzugt handelt es sich um ein einwertiges Gegenion, wie NH₄⁺-, Ammoniumionen mit organischen Resten oder Alkalimetallionen. Bevorzugt steht Y für Li⁺, Na⁺ und K⁺, und besonders bevorzugt ist Na⁺. Das Tensid (A) kann also als freie Säure vorliegen oder als ein Salz davon.

In einer bevorzugten Ausführungsform der Erfindung handelt es sich bei R¹ um einen linearen, aliphatischen Kohlenwasserstoffrest, insbesondere um einen linearen, aliphatischen Kohlenwasserstoffrest mit 9 bis 18 Kohlenstoffatomen, wobei x für eine Zahl von 4 bis 30, bevorzugt 6 bis 18 steht.

In einer weiteren bevorzugten Ausführungsform der Erfindung handelt es sich bei R¹ um einen verzweigten, aliphatischen Kohlenwasserstoffrest, wobei x für eine Zahl von 4 bis 30, bevorzugt 6 bis 18 steht.

Die Tenside (A) werden mittels eines mindestens zweistufigen Verfahrens hergestellt, indem man in einem ersten Verfahrensschritt (1) einen Alkohol R¹-OH mit Propylenoxid sowie optional Ethylenoxid zu einem alkoxylierten Alkohol der allgemeinen Formel R¹-O-(CH₂-CH-(CH₃)O)ₓ-(CH₂-CH₂O)_{y}-H (II) alkoxyliert, wobei R¹, x und y die obige Bedeutung haben. In einem zweiten Schritt werden die alkoxylierten Alkohole (II) nach dem Fachmann prinzipiell bekannten Verfahren sulfatiert.

Erfindungsgemäß kann die Alkoxylierung unter Verwendung von DoppelmetallcyanidKatalysatoren (DMC-Katalysatoren) vorgenommen werden. Hierdurch werden alkoxylierte Alkohole erhalten, welche eine engere Molekulargewichtsverteilung aufweisen, als alkoxylierte Alkohole, welche mittels einer üblichen basenkatalysierten Alkoxylierung, beispielsweise einer üblichen Alkoxylierung mit KOH erhalten werden.

Die Molekulargewichtsverteilung der erhaltenen Alkohole kann in prinzipiell bekannter Art und Weise durch die sogenannte Polydispersität D beschrieben werden. Bei D = M_{w}/Mₙ handelt es sich um den Quotienten aus dem Gewichtsmittel der molaren Masse und dem Zahlenmittel der molaren Masse. Mittels DMC-Katalyse lassen sich alkoxylierte Alkohole mit Polydispersitäten von weniger als 1,05 erreichen.

Dopelmetallcyanid(DMC)-Katalysatoren zur Durchführung von Alkoxylierungen sind dem Fachmann prinzipiell bekannt. Geeignete DMC-Katalysatoren sind beispielsweise in der DE 102 43 361 A1, insbesondere den Abschnitten [0029] bis [0041] sowie der darin zitierten Literatur offenbart, wie beispielsweise WO 00/74845 oder WO 99/16775. Beispielsweise können Katalysatoren vom Zn-Co-Typ eingesetzt werden.

Zur Durchführung der Reaktion kann der Alkohol R¹-OH mit dem Katalysator versetzt werden. Durch verminderten Druck (bspw. <100 mbar) und/oder Erhöhung der Temperatur (30 bis 150°C) kann noch in der Mischung vorhandenes Wasser abgezogen werden. Anschließend wird mit Inertgas (z.B. Stickstoff) inertisiert und das Ethylenoxid bei Temperaturen von 60 bis 180°C bis zu einem Druck von max. 10 bar (1 000 000 Pa) schrittweise zugegeben. Es werden üblicherweise nicht mehr als 1000 ppm Katalysator bezüglich der Mischung eingesetzt, und der Katalysator kann aufgrund dieser geringen Menge im Produkt verbleiben. Die Katalysatormenge kann in der Regel geringer sein als 1000 ppm, beispielsweise 250 ppm und weniger.

Die Erfindung ist aber nicht auf die Verwendung von Doppelmetallcyanidkatalysatoren zur Durchführung der Alkoxylierung beschränkt. Es können prinzipiell alle Verfahren zur Alkoxylierung des Alkohols R¹-OH eingesetzt werden, welche zu alkoxylierten Alkoholen führen, die eine -im Vergleich zur Basenkatalyse mit KOH- engere Molekulargewichtsverteilung aufweisen. Mit anderen Worten gesagt sind alle Methoden geeignet, bei denen das Verhältnis Dv / D_{KOH} < 1 ist, wobei Dᵥ die Polydispersität eines mittels des verwendeten Verfahrens erhaltenen Produktes und D_{KOH} die Polydispersität eines mittels KOH-Katalyse erhaltenen Produktes ist. Zur Synthese der Tenside (A) können als Katalysator beispielsweise auch beispielsweise Doppelhydroxidtone wie in DE 43 25 237 A1 beschrieben eingesetzt werden oder Katalysatoren ausgewählt aus der Gruppe von hydrophobierten Hydrotalciten, modifizierten Oxiden oder Hydroxiden von Calcium, Strontium oder Barium oder Phosphaten von Lanthan oder Lanthaniden.

Die Sulfatierung des alkoxylierten Alkohols (II) bereitet keinerlei Schwierigkeiten und kann nach dem Fachmann prinzipiell bekannten Methoden durchgeführt werden. Beispielsweise kann der alkoxylierte Alkohol (II) mit Schwefeltrioxid oder Chlorsulfonsäure umgesetzt werden. Die Sulfatierung mit Schwefeltrioxid kann beispielsweise in einem Fallfilmreaktor durchgeführt werden. Das Reaktionsprodukt kann anschließend neutralisiert werden, beispielsweise mit Natronlauge.

### Tenside (B)

Neben dem mindestens einen Tensid (A) umfasst die verwendete Formulierung mindestens ein davon verschiedenes Tensid (B) der allgemeinen Formel R²-Y (II). Selbstverständlich kann auch eine Mischung mehrerer verschiedener Tenside (B) eingesetzt werden.

Bei R² handelt es sich um einen geradkettigen oder verzweigten, aliphatischen und/oder aromatischen Kohlenwasserstoffrest mit 8 bis 32 Kohlenstoffatomen, bevorzugt 9 bis 28 und besonders bevorzugt 10 bis 24 Kohlenstoffatomen.

In der Formel (II) steht Y für eine hydrophile Gruppe. Es kann sich hierbei prinzipiell um beliebige hydrophile Gruppen handeln, vorausgesetzt die Gruppe ist ausreichend polar um der Verbindung amphiphile Eigenschaften, also Tensideigenschaften zu verleihen. Es kann sich um nichtionische Tenside, anionische, kationische oder betainische Tenside handeln.

Bevorzugt handelt es sich bei der Gruppe Y um eine Gruppe ausgewählt aus der Gruppe von Sulfatgruppen, Sulfonatgruppen, Polyoxyalkylengruppen, anionisch modifizierten Polyoxyalkylengruppen, Glucosidgruppen, Betaingruppen oder Aminoxidgruppen.

In einer Ausführungsform der Erfindung handelt es sich bei dem Tensid (B) um ein anionisches Tensid, insbesondere um ein Sulfonsäuregruppen aufweisendes anionisches Tensid ohne zusätzliche Alkoxygruppen. Beispiele derartiger Tenside umfassen Alkylbenzolsulfonate, Olefinsulfonate, Paraffinsulfonate, Alkylcarboxylate, Alkylsulfate und/oder Alkylphosphate.

In einer weiteren Ausführungsform der Erfindung handelt es sich bei dem Tensid (B) um ein Tensid ausgewählt aus der Gruppe von Alkylethoxylaten handelt, wobei die Polyethergruppe des Tensids jeweils 2 bis 40 Ethereinheiten umfasst.

In einer weiteren Ausführungsform der Erfindung handelt es sich bei dem Tensid (B) um ein Tensid ausgewählt aus der Gruppe von Alkylbenzolsulfonaten, Olefinsulfonaten oder Paraffinsulfonaten.

### Weitere Tenside

Neben den Tensiden (A) und (B) kann die Formulierung darüber hinaus optional noch von (A) und (B) verschiedene Tenside (C) umfassen.

Bei Tensiden (C) kann es sich insbesondere um oligomere oder polymere Tenside handeln. Mit derartigen polymeren Cotensiden lässt sich vorteilhaft die zur Bildung einer Mikroemulsion notwendige Menge an Tensid reduzieren. Derartige polymere Cotenside werden daher auch als "Mikroemulsionsbooster" bezeichnet. Beispiele derartiger polymerer Tenside (C) umfassen amphiphile Blockcopolymere, welche mindestens einen hydrophilen und mindestens einen hydrophoben Blocke umfassen. Beispiele umfassen Polypropylenoxid-Polyethylenoxid-Blockcopolymere, Polyisobuten-Polyethylenoxid-Blockcopolymere sowie Kammpolymere mit Polyethylenoxid-Seitenketten und einer hydrophoben Hauptkette, wobei die Hauptkette bevorzugt im Wesentlichen Olefine oder (Meth)acrylate als Baueinheiten umfasst. Der Begriff "Polyethylenoxid" soll hierbei jeweils Propylenoxideinheiten umfassende Polyethylenoxidblöcke gemäß obiger Definition einschließen. Nähere Einzelheiten zu derartigenTensiden sind in WO 2006/131541 offenbart.

### Verfahren zur Erdölförderung

Beim erfindungemäßen Verfahren zur Erdölförderung wird eine geeignete wässrige Formulierung der Tenside (A) und (B) sowie optional (C) durch mindestens eine Injektionsbohrung in die Erdöllagerstätte eingepresst, und der Lagerstätte wird durch mindestens eine Produktionsbohrung Rohöl entnommen. Eine solche Technik ist auch als "Tensidfluten" bekannt. Mit dem Begriff "Rohöl" ist in diesem Zusammenhang selbstverständlich nicht phasenreines Öl gemeint, sondern gemeint sind die üblichen Rohöl-Wasser-Emulsionen. In der Regel wird eine Lagerstätte mit mehreren Injektionsbohrungen und mit mehreren Produktionsbohrungen versehen. Die Hauptwirkung der Tenside liegt hierbei in der Reduzierung der Grenzflächenspannung zwischen Wasser und Öl. Hierdurch wird die Mobilität des Erdöls in der Lagerstätte erhöht, und dadurch kann Erdöl gefördert werden, welches ohne die Anwendung von Tensiden in der Lagerstätte verbliebe. Hierbei sollte die Grenzflächenspannung zwischen Wasser und Öl auf Werte von weniger als 0,1 mN/m, bevorzugt weniger als 0,01 mN/m abgesenkt werden.

Im Anschluss an das Einpressen der Tensidformulierung kann zur Aufrechterhaltung des Drucks Wasser in die Formation injiziert werden ("Wasserfluten"), oder bevorzugt eine höherviskose, wässrige Lösung eines stark verdickend wirkenden Polymers ("Polymerfluten"). Weitere bekannte Techniken sind die Injektion von einer wässrigen Lösung, die Tensid und verdickenes Polymer enthält. Optional kann diese auch noch Alkali oder Soda enthalten. Nachfolgend wird eine wässrige Lösung, die nur verdickendes Polymer enthält, injiziert. Es sind aber auch Techniken bekannt, nach dem man die Tenside zunächst einmal auf die Formation einwirken lässt. Dem Fachmann sind Einzelheiten zur technischen Durchführung des "Tensidflutens", "Wasserflutens" und "Polymerflutens" bekannt, und er wendet je nach Art der Lagerstätte eine entsprechende Technik an.

In einer bevorzugten Ausführungsform der Erfindung handelt es sich bei dem erfindungemäßen Verfahren zur Erdölförderung um "Winsor Typ III Mikroemulsionsfluten", d.h. die injizierte Tensidmischung bildet in der Lagerstätte zusammen mit der in der Lagerstätte vorhandenen Wasser- und der Ölphase eine Mikroemulsion Winsor Typ III. Einzelheiten zu Winsor III - Mikroemulsionen sowie deren Vorteilen wurden bereits eingangs geschildert. Zum Winsor Typ III - Mikroemulsionsfluten sollte die Grenzflächenspannung zwischen Wasser und Öl auf Werte von weniger als 0,1 mN/m, bevorzugt weniger als 0,015 mN/m und besonders bevorzugt weniger als 0,01 mN/m abgesenkt werden.

Für das erfindungsgemäße Verfahren wird eine wässrige Formulierung der Tenside (A), (B) sowie optional (C) eingesetzt. Die nachfolgend beschriebenen Formulierungen eignen sich besonders zum Winsor III - Mikroemulsionsfluten, können aber auch für andere Techniken des Tensidflutens eingesetzt werden.

Neben Wasser können die Formulierungen optional auch noch mit Wasser mischbare oder zumindest in Wasser dispergierbare organische Lösemittel umfassen. Derartige Zusätze dienen insbesondere zur Stabilisierung der Tensidlösung während der Lagerung bzw. des Transportes zum Ölfeld. Die Menge derartiger zusätzlicher Lösemittel sollte aber im Regelfalle 50 Gew. %, bevorzugt 20 Gew. % und besonders bevorzugt 10 Gew. % nicht überschreiten. In einer besonders vorteilhaften Ausführungsform der Erfindung wird ausschließlich Wasser zu formulieren verwendet. Beispiele mit Wasser mischbarer Lösemittel umfassen insbesondere Alkohole, wie Methanol, Ethanol oder Propanol sowie C₁- bis C₆-Monoalkylether von Mono- oder Oligoglykolen mit bis zu 6 Alkylenoxideinheiten wie Butylethylenglykol, Butyldiethylenglykol oder Butyltriethylenglykol.

Das Gewichtsverhältnis der Tenside (A) und (B) zueinander beträgt erfindungsgemäß 10 : 1 bis 1 : 20, bevorzugt 3 : 1 bis 1 : 10 und ganz besonders bevorzugt 2 : 1 bis 1 :4.

Erfindungsgemäß beträgt der Anteil der Tenside (A) und (B) zusammen mindestens 50 Gew. % bezüglich des Anteils aller vorhandenen Tenside, also den Tensiden (A), (B) sowie optional (C) zusammen. Bevorzugt beträgt der Anteil mindestens 75 Gew. %, besonders bevorzugt mindestens 90 Gew. %, und ganz besonders bevorzugt werden als Tenside in der Formulierung nur die Tenside (A) und (B) eingesetzt.

Neben den Tensiden können die Formulierungen auch noch weitere Komponenten enthalten wie beispielsweise C₄- bis C₈-Alkohole sowie deren Alkoxylate mit bis zu 6 Alkylenoxideinheiten und/oder basische Salze (so genantes "alkali surfactant flooding"). Mit derartigen Zusätzen kann beispielsweise die Retention in der Formation reduziert werden. Das Mengenverhältnis der Alkohole bezüglich der eingesetzten Gesamttensidmenge beträgt in der Regel mindestens 1:1 - es kann jedoch auch ein deutlicher Überschuss an Alkoholen verwendet werden. Die Menge an basischen Salzen kann typischerweise von 0,1 Gew. % bis 5 Gew. % reichen.

Der Fachmann kann durch die Auswahl der Tenside (A) und (B) sowie deren Gewichtsverhältnis zueinander die optimale Temperatur zur Ausbildung einer Mikroemulsion Tₒₚₜ beeinflussen und an die Temperatur der Lagerstätte anpassen.
Die Lagerstätten, in denen das Verfahren angewandt wird, weisen in der Regel eine Temperatur von mindestens 15°C, beispielsweise 15 bis 130°C auf, bevorzugt eine Temperatur von 15 bis 80°C und besonders bevorzugt eine Temperatur von15 bis 70°C.

Die Gesamtkonzentration aller Tenside zusammen beträgt 0,05 bis 5 Gew. % bezüglich der Gesamtmenge der wässrigen Tensidformulierung, bevorzugt 0,1 bis 2,5 Gew. %. Der Fachmann trifft je nach den gewünschten Eigenschaften, insbesondere je nach den Verhältnissen in der Erdölformation eine geeignete Auswahl. Für den Fachmann ist hierbei klar, dass sich Konzentration der Tenside nach dem Injizieren in die Formation ändern kann, weil sich die Formulierung mit Formationswasser vermischen kann oder Tenside auch an festen Oberflächen der Formation absorbieren können. Es ist der große Vorteil der erfindungsgemäß verwendeten Mischungen, dass die Ausbildung einer Mikroemulsion durch eine derartige Veränderung der Gesamtkonzentration nicht übermäßig stark beeinflusst wird.

Für den Fachmann auf dem Gebiet des Tensidflutens ist klar, dass auch die Lagerstättenbedingungen, wie beispielsweise die Lagerstättentemperatur, der Druck, die Natur des Öls in der Lagerstätte sowie Art und Menge enthaltener Salze die Bedingungen für die optimale Ausbildung einer Winsor III - Mikroemulsion beeinflussen. Unter Berücksichtigung der obigen Angaben kann der Fachmann die Tensidformulierung für die Anwendung in ganz bestimmten Erdöllagerstätten mittels einiger Routineversuche optimieren.

Es ist selbstverständlich möglich und in der Regel auch empfehlenswert, zunächst ein Konzentrat herzustellen, welches erst vor Ort auf die gewünschte Konzentration zum Injizieren in die Formation verdünnt wird. In der Regel beträgt die Gesamtkonzentration der Tenside in einem solchen Konzentrat 15 bis 60 Gew. %, insbesondere 15 bis 45 Gew. %.

Die erfindungsgemäß verwendeten Tensidmischungen mit unter Verwendung von Doppelmetallcyanidkatalysatoren oder Doppelhydroxidtonen hergestellten Tensiden (A) weisen verbesserte Eigenschaften zur tertiären Erdölförderung auf. Sie führen insbesondere zu besonders niedrigen Grenzflächenspannungen und zu einer besonders schnellen Phasentrennung. Ohne an eine bestimmte Theorie gebunden sein zu wollen, scheint dies einerseits an einer geringeren Polydispersität der Tenside (A) zu liegen. Weiterhin scheinen bei Verwendung von Doppelmetallcyanidkatalysatoren oder Doppelhydroxidtonen gewisse Nebenprodukte, wie beispielsweise Allylalkyoxysulfonate nicht oder im Vergleich zur KOH-Katalyse geringeren Mengen vorhanden zu sein. Derartige Produkte können durch KOH-katalysierte Umlagerung von Propenoxid zu Allylalkohol erhalten werden. Der erhaltene Allylalkohol wird dann analog dem Alkohol R¹- OH alkoxyliert und sulfatiert. Die erhaltenen Produkte sind als Tenside aber nicht wirksam.

Die nachfolgenden Beispiele sollen die Erfindung näher erläutern:

### Teil I: Synthese der verwendeten Tenside (A)

### Allgemeine Vorschrift 1: Propoxylierung mittels KOH-Katalyse

In einem 2l Autoklaven wird der zu propoxylierende Alkohol (1.0 eq) mit einer wässrigen KOH-Lösung, die 50 Gewichtsprozent KOH enthält, versetzt. Dabei beträgt die Menge an KOH 0.3 Gewichtsprozent des herzustellenden Produktes. Unter Rühren wird die Mischung bei 100°C und 20 mbar für 2 h entwässert. Anschließend wird dreimal mit N₂ gespült, ein Vordruck von ca. 1.3 bar N₂ eingestellt und die Temperatur auf 120-130°C erhöht. Das Propylenoxid wird so zudosiert, dass die Temperatur zwischen 125°C-140°C bleibt. Anschließend wird 5 h bei 125-140°C nachgerührt, mit N₂ gespült, auf 70°C abgekühlt und der Reaktor entleert. Die eingesetzte Menge Alkalihydroxid wird mit Hilfe von Essigsäure neutralisiert. Alternativ kann die Neutralisierung auch mit handelsüblichen Mg-Silikaten erfolgen, welche anschließend abfiltriert werden. Das helle Produkt wird mit Hilfe eines 1 H-NMR-Spektrums in CDCl3, einer Gel-Permeations-Chromatographie sowie einer OH-Zahl-Bestimmung und Jodfarbzahl charakterisiert und die Ausbeute ermittelt.

### Allgemeine Vorschrift 2: Propoxylierung mittels DMC-Katalyse

In einem 2l Autoklaven wird der zu propoxylierende Alkohol (1.0 eq) mit einem Doppelmetallcyanid-Katalysator (z.B. DMC-Katalysator der Firma BASF Typ Zn-Co) bei 80°C vermischt. Zur Aktivierung der Katalysators wird bei 80°C und 20 mbar für 1 h angelegt. Dabei beträgt die Menge an DMC 0.1 Gewichtsprozent und weniger des herzustellenden Produktes. Anschließend wird dreimal mit N₂ gespült, ein Vordruck von ca. 1.3 bar N₂ eingestellt und die Temperatur auf 120-130°C erhöht. Das Propylenoxid wird so zudosiert, dass die Temperatur zwischen 125°C-140°C bleibt. Anschließend wird 5 h bei 125-140°C nachgerührt, mit N₂ gespült, auf 70°C abgekühlt und der Reaktor entleert. Das helle Produkt wird mit Hilfe eines 1 H-NMR-Spektrums in CDCl3, einer Gel-Permeations-Chromatographie sowie einer OH-Zahl-Bestimmung und Jodfarbzahl charakterisiert und die Ausbeute ermittelt.

### Allgemeine Vorschrift 3: Sulfatierung mittels Chlorsulfonsäure

In einem 1l Rundhalskolben wird das zu sulfatierende Alkylalkoxylat (1.0 eq) in der 1,5fachen Menge Dichlormethan (auf Basis von Gewichtsprozent) gelöst und auf 5-10°C abgekühlt. Danach wird Chlorsulfonsäure (1.1 eq) so zugetropft, dass die Temperatur nicht 10°C übersteigt. Man lässt auf Raumtemperatur erwärmen und 4 h bei dieser Temperatur unter N₂-Strom rühren, bevor obiges Reaktionsgemisch in eine wässrige NaOH-Lösung mit halbem Volumen bei max. 15°C getropft wird. Die NaOH-Menge ist so berechnet, dass sich ein leichter Überschuss bezüglich der verwendeten Chlorsulfonsäure ergibt. Der resultierende pH-Wert liegt bei ca. 9-10. Das Dichlormethan wird unter leichtem Vakuum am Rotationsverdampfer bei max. 50°C entfernt.
Das Produkt wird per 1 H-NMR charakterisiert und der Wassergehalt der Lösung bestimmt (ca. 70%).

Für die Synthese wurde nachfolgender Alkohol eingesetzt.

| Alkohol | Beschreibung |
|---|---|
| iC17 | iso-C₁₇H₃₅-OH; Oxoalkohol, hergestellt durch Hydroformylierung von iso-Hexadecen, welches durch Tetramerisierung von Buten gewonnen wird. Der mittlere Verzweigungsgrad des Alkohols beträgt 3,1. |

Der Alkohol wurde gemäß Vorschrift 1 bzw. 2 propoxyliert. Der jeweilige Propoxylierungsgrad ist in Tabelle 1 angegeben. Das iC₁₇-Propoxylat auf Basis von KOH-Katalyse enthielt laut Jodfarbzahl und ¹H-NMR 4% Umlagerungerungsprodukt (Allylpropoxylat) während das Alkylpropoxylat auf Basis von DMC-Katalyse laut Jodfarbzahl und 1 H-NMR <1% Umlagerungerungsprodukt zeigte. Anschließend wurden beide Alkylpropoxylate gemäß Vorschrift 3 sulfatiert. Der Sulfatierungsgrad beträgt laut 1 H-NMR jeweils >95%.

Die verwendete Anlage war eine Agilent 1200 Series mit Pumpe, Degasser, RI-Detektor, Autosampler und Säulenthermostat. Als Software wurde PSS 6.03 verwendet. Als Säulen dienten:
- Vorsäule SDV 5µ - 8x50mm
- SDV 5 µ 100 Å
- SDV 5µ 1000 Å
- SDV 5µ 100000 Å

Kalibrationssubstanzen waren DIN -Polystyrol von PSS. Als Standard dienteToluol. Eluent war Tetrahydrofuran für die Chromatographie. Die Flussrate betrug 1 ml / min. Ca. 25mg der Probe werden in 1 ml Lösungsmittel (250ml THF-1,5g Toluol) gelöst, wobei das Toluol schon vorher mit dem THF gemischt wird, um reproduzierbare Ergebnisse zu erzielen.

Der Vergleich der Polydispersitäten per GPC zeigt auf, dass per DMC-Katalyse hergestellte alkoxylierte Alkohole iC₁₇-O-(CH₂-CH-(CH₃)O)_{7,8}H eine engere Molekulargewichtsverteilung und damit niedrigere Polydispersität (D = 1.047) aufwiesen als per KOH-Katalyse hergestelltes iC₁₇-O-(CH₂-CH-(CH₃)O)_{7,9}H (D = 1.060).

### Anwendungstechnische Tests

Mit den erhaltenen Tensiden wurden die folgenden Tests durchgeführt, um deren Eignung zur tertiären Erdölförderung zu bewerten.

### Beschreibung der Messmethoden

### Ermittlung von SP*

### a) Prinzip der Messung:

Die Grenzflächenspannung zwischen Wasser und Öl wurde in bekannter Art und Weise über die Messung des Solubilisationsparameters SP* bestimmt. Die Bestimmung der Grenzflächenspannung über die Bestimmung des Solubilisationsparameters SP* ist eine in der Fachwelt akzeptierte Methode zur näherungsweisen Bestimmung der Grenzflächenspannung. Der Solubilisationsparameter SP *gibt an, wieviel ml Öl pro ml eingesetztem Tensid in einer Mikroemulsion (Windsor Typ III) gelöst wird. Die Grenzflächenspannung σ (interfacial tension; IFT) kann hieraus über die Näherungsformel IFT ≈ 0.3/(SP*)² errechnet werden, falls gleiche Volumina von Wasser und Öl eingesetzt werden (C. Huh, J. Coll. Interf. Sc., Vol. 71, No. 2 (1979)).

### b) Arbeitsvorschrift

Zur Bestimmung des SP* wird ein 100 ml Messzylinder mit Magnetrührfisch mit 20 ml Öl und 20 ml Wasser befüllt. Dazu werden 5 Gewichtsprozent der Mischung aus den Tensiden (A) und (B) als Haupttensid sowie 4 Gewichtsprozent Butyldiethylenglykol als Cotensid (C) bzgl. der Wasserphase gegeben. Anschließend wird die Temperatur von 20 auf 90°C schrittweise erhöht, und es wird beobachtet, in welchem Temperaturfenster sich eine Mikroemulsion bildete.

Die Ausbildung der Mikroemulsion kann visuell beobachtet werden oder auch mit Hilfe von Leüfähigkeitsmessungen. Es bildet sich ein Dreiphasensystem aus (obere Phase Öl, mittlere Phase Mikroemulsion, untere Phase Wasser). Sind obere und untere Phase gleich groß und verändern sich über einen Zeitraum von 12 h auch nicht mehr, so hat man die optimale Temperatur (Tₒₚₜ) der Mikroemulsion gefunden. Das Volumen der mittleren Phase wird bestimmt. Von diesem Volumen wird das Volumen an zugegebenem Tensid abgezogen. Der erhaltene Wert wird danach durch zwei geteilt. Dieses Volumen wird nun durch das Volumen an zugegebenem Tensid geteilt. Das Ergebnis wird als SP* notiert.

Die Art der zur Bestimmung von SP* eingesetzten Öls und Wassers wird je nach dem zu untersuchenden System bestimmt. Es kann einerseits Erdöl selbst eingesetzt werden , oder auch ein Modellöl wie beispielsweise Decan oder Hexadecan. Als Wasser kann sowohl reines Wasser eingesetzt werden, wie auch salines Wasser, um die Verhältnisse in der Erdölformation besser zu modellieren. Die Zusammensetzung der wässrigen Phase kann beispielsweise entsprechend der Zusammensetzung eines bestimmten Lagerstättenwassers eingestellt werden.

Angaben zu der verwendeten wässrigen Phase und der Ölphase finden sich unten bei der konkreten Beschreibung der Versuche.

### Testergebnisse:

Es wurde eine 1 : 1 Mischung aus Decan und einer 6%igen NaCl-Lösung verwendet. Dazu wurde eine Tensidmischung aus 3 Teilen des jeweils verwendeten Alkylpropoxysulfates (Tensid (A)) und 1 Teil Dodecylbenzolsulfonat (Tensid (B)) gegeben. Die Haupttensidkonzentration betrug 5 Gewichtsprozent der Wasserphase. Als weiteres Tensid (C) verwendete man Butyldiethylenglykol (BDG). Die Cotensidkonzentration betrug 4 Gewichtsprozent der Wasserphase. Die Ergebnisse sind in Tabelle 1 zusammengestellt.

Das Beispiel 1 und das Vergleichsbeispiel 1 zeigen, dass die mittels DMC-Katalyse hergestellten Tenside (A) niedrigere Grenzflächenspannungen und eine schnellere Ausbildung der Mikroemulsion (niedrigere Separationszeit) ergeben, als entsprechende Alkylpropoxysulfate mit gleicher Anzahl von Propoxyeinheiten, aber Alkoxylierung unter KOH-Katalyse.

**Tabelle 1: Zusammenstellung der Ergebnisse**

| Beispiel Nr. | Tensid (A) | Tensid (B) | Gewichts-verhältnis (A)/(B) | Gesamtmenge (A) + (B) [Gew. %] | Tensid (C) | | Gesamtkonzentration Tenside [Gew.%] | Anteil (A) + (B) bzgl. aller Tenside | Topt [°C] | SP* | IFT [mN/m] bei Tₒₚₜ | Separationszeit [min] |
|---|---|---|---|---|---|---|---|---|---|---|---|---|
| | | | | | Art | Menge [Gew.%] | | | | | | |
| Bsp. 1 | iC17 - 7.8 PO- Sulfat (DMC-Katalyse) | DBS | 3 : 1 | 5 | BDG | 4 | 9 | 55,6 | 45 | 4.5 | 0,0148 | 5 |
| | | | | | | | | | | | | |
| V 1 | iC17 - 7.9 PO - Sulfat (KOH-Katalyse) | DBS | 3 : 1 | 5 | BDG | 4 | 9 | 55,6 | 51 | 3.3 | 0,0275 | 10 |

| | | | | | | | | | | | | |
|---|---|---|---|---|---|---|---|---|---|---|---|---|
| BDG: Butyldiethylenglykol DBS: Dodecylbezolsulfonat, Na-Salz, C₁₂H₂₅PhSO₃N | | | | | | | | | | | | |

## Patentansprüche

1. Verfahren zur Erdölförderung, bei dem man eine wässrige Tensidformulierung umfassend mindestens ein anionisches Tensid und mindestens ein weiteres Tensid durch mindestens eine Injektionsbohrung in eine Erdöllagerstätte einpresst und der Lagerstätte durch mindestens eine Produktionsbohrung Rohöl entnimmt, **dadurch gekennzeichnet dass** die Tensidmischung mindestens umfasst
(A) mindestens ein Tensid (A) der allgemeinen Formel
R¹-O-(CH₂-CH-(CH₃)O)ₓ-(CH₂-CH₂O)_{y}-SO₃M,
wobei
• R¹ für einen geradkettigen oder verzweigten aliphatischen und/oder aromatischen Kohlenwasserstoffrest mit 8 bis 32 Kohlenstoffatomen,
• M für H⁺ und/oder ein k-wertiges Gegenion ¹/ₖ Y^{k+},
• x für eine Zahl von 4 bis 30, und
• y für eine Zahl von 0 bis 30 steht,
• und die Summe x + y ≤ 50 ist,
wobei das Tensid (A) durch Sulfatierung eines alkoxylierten Alkohols R¹-O-(CH₂-CH-(CH₃)O)ₓ-(CH₂-CH₂O)_{y}-H mit einer Polydispersität M_{w}/Mₙ < 1,05, erhältlich durch Alkoxylierung eines Alkohols R¹-OH unter Verwendung von Doppelmetallcyanidkatalysatoren oder Doppelhydroxidtonen erhältlich ist, und
(B) mindestens ein davon verschiedenes Tensid (B) der allgemeinen Formel R²-Y, wobei R² für einen geradkettigen oder verzweigten aliphatischen und/oder aromatischen Kohlenwasserstoffrest mit 8 bis 32 Kohlenstoffatomen steht und Y für eine hydrophile Gruppe,
wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

2. Verfahren gemäß Anspruch 1, **dadurch gekennzeichnet, dass** es sich bei R¹ um einen linearen, aliphatischen Kohlenwasserstoffrest handelt, und x für eine Zahl von 4 bis 30 steht.

3. Verfahren gemäß Anspruch 1, **dadurch gekennzeichnet, dass** es sich bei R¹ um einen verzweigten, aliphatischen Kohlenwasserstoffrest handelt, und x für eine Zahl von 4 bis 30 steht.

4. Verfahren gemäß einem der Ansprüche 1 bis 3, **dadurch gekennzeichnet, dass** es sich bei der Gruppe Y des Tensids (B) um eine Gruppe ausgewählt aus der Gruppe von Sulfatgruppen, Sulfonatgruppen, Polyoxyalkylengruppen, anionisch modifizierten Polyoxyalkylengruppen, Betaingruppen, Glucosidgruppen oder Aminoxidgruppen handelt.

5. Verfahren gemäß einem der Ansprüche 1 bis 3, **dadurch gekennzeichnet, dass** es sich bei dem Tensid (B) um ein anionisches Tensid handelt.

6. Verfahren gemäß einem der Ansprüche 1 bis 3, **dadurch gekennzeichnet, dass** es sich bei dem Tensid (B) um ein Tensid ausgewählt aus der Gruppe von Alkylethoxylaten handelt, wobei die Polyethergruppe des Tensids jeweils 2 bis 40 Ethereinheiten umfasst.

7. Verfahren gemäß einem der Ansprüche 1 bis 3, **dadurch gekennzeichnet, dass** es sich bei dem Tensid (B) um mindestens ein Tensid ausgewählt aus der Gruppe von Alkylbenzolsulfonaten, Olefinsulfonaten oder Paraffinsulfonaten handelt.

8. Verfahren gemäß einem der Ansprüche 1 bis 7, **dadurch gekennzeichnet, dass** die Gesamtkonzentration aller Tenside zusammen 0,05 bis 5 Gew. % bezüglich der Gesamtmenge der wässrigen Tensidformulierung beträgt.

9. Verfahren gemäß einem der Ansprüche 1 bis 8, **dadurch gekennzeichnet, dass** sich bei dem Verfahren um Winsor Typ III - Mikroemulsionsfluten handelt, wobei die Grenzflächenspannung zwischen Wasser und Öl weniger als 0,1 mN/m beträgt.

10. Verfahren gemäß Anspruch 9, **dadurch gekennzeichnet, dass** die Grenzflächenspannung weniger als 0,01 mN/m beträgt.

11. Wässrige Tensidformulierung für die Erdölförderung, umfassend mindestens ein anionisches Tensid und mindestens ein weiteres Tensid, **dadurch gekennzeichnet dass** die Tensidmischung mindestens
(A) mindestens ein Tensid (A) der allgemeinen Formel
R¹-O-(CH₂-CH-(CH₃)O)ₓ-(CH₂-CH₂O)_{y}-SO₃M,
wobei
• R¹ für einen geradkettigen oder verzweigten aliphatischen und/oder aromatischen Kohlenwasserstoffrest mit 8 bis 32 Kohlenstoffatomen,
• M für H⁺ und/oder ein k-wertiges Gegenion ¹/ₓ Y^{x+},
• x für eine Zahl von 4 bis 30, und
• y für eine Zahl von 0 bis 30 steht,
• und die Summe x + y ≤ 50 ist,
wobei das Tensid (A) durch Sulfatierung eines alkoxylierten Alkohols R¹-O-(CH₂-CH-(CH₃)O)ₓ-(CH₂-CH₂O)_{y}-H mit einer Polydispersität M_{w}/Mₙ < 1,05 erhältlich durch Alkoxylierung eines Alkohol R₁-OH unter Verwendung von Doppelmetallcyanidkatalysatoren oder Doppelhydroxidtonen erhältlich ist, und
(B) mindestens ein davon verschiedenes Tensid (B) der allgemeinen Formel R²-Y, wobei R² für einen geradkettigen oder verzweigten aliphatischen und/oder aromatischen Kohlenwasserstoffrest mit 8 bis 32 Kohlenstoffatomen steht und Y für eine hydrophile Gruppe,
umfasst, wobei das Gewichtsverhältnis (A) / (B) 10 : 1 bis 1 : 20 beträgt, und der Anteil der Tenside (A) und (B) zusammen mindestens 50 Gew. % bezüglich der Menge aller Tenside in der eingesetzten Tensidmischung beträgt.

12. Wässrige Tensidformulierung gemäß Anspruch 11, **dadurch gekennzeichnet, dass** die Gesamtkonzentration aller Tenside zusammen 0,05 bis 5 Gew. % bezüglich der Gesamtmenge der wässrigen Tensidformulierung beträgt.

## Claims

1. A process for mineral oil production in which an aqueous surfactant formulation comprising at least one anionic surfactant and at least one further surfactant is forced through at least one injection well into a mineral oil deposit and crude oil is removed from the deposit through at least one production well, wherein the surfactant mixture at least comprises
(A) at least one surfactant (A) of the general formula
R¹-O-(CH₂-CH-(CH₃)O)ₓ-(CH₂-CH₂O)_{y}-SO₃M,
in which
• R¹ is a straight-chain or branched aliphatic and/or aromatic hydrocarbon radical having 8 to 32 carbon atoms,
• M is H⁺ and/or a k-valent counterion ¹/ₖ Y^{k+},
• x is a number from 4 to 30, and
• y is a number from 0 to 30,
• and the sum x + y is ≤ 50,
the surfactant (A) being obtainable by sulfation of an alkoxylated alcohol R¹-O-(CH₂-CH-(CH₃)O)ₓ-(CH₂-CH₂O)y-H having a polydispersity M_{w/}Mₙ < 1.05, obtainable by alkoxylation of an alcohol R¹-OH using double metal cyanide catalysts or double hydroxide clays, and
(B) at least one surfactant (B) differing therefrom and of the general formula R²-Y, in which R² is a straight-chain or branched aliphatic and/or aromatic hydrocarbon radical having 8 to 32 carbon atoms and Y is a hydrophilic group, the weight ratio (A)/(B) being from 10 : 1 to 1 : 20, and the proportion of the surfactants (A) and (B) together being at least 50% by weight, based on the amount of all surfactants in the surfactant mixture used.

2. The process according to claim 1, wherein R¹ is a linear, aliphatic hydrocarbon radical and x is a number from 4 to 30.

3. The process according to claim 1, wherein R¹ is a branched, aliphatic hydrocarbon radical and x is a number from 4 to 30.

4. The process according to any of claims 1 to 3, wherein the group Y of the surfactant (B) is a group selected from the group consisting of sulfate groups, sulfonate groups, polyoxyalkylene groups, anionically modified polyoxyalkylene groups, betaine groups, glucoside groups or amine oxide groups.

5. The process according to any of claims 1 to 3, wherein the surfactant (B) is an anionic surfactant.

6. The process according to any of claims 1 to 3, wherein the surfactant (B) is a surfactant selected from the group consisting of alkyl ethoxylates, the polyether group of the surfactant comprising in each case from 2 to 40 ether units.

7. The process according to any of claims 1 to 3, wherein the surfactant (B) is at least one surfactant selected from the group consisting of alkylbenzenesulfonates, olefinsulfonates or paraffinsulfonates.

8. The process according to any of claims 1 to 7, wherein the total concentration of all surfactants together is from 0.05 to 5% by weight, based on the total amount of the aqueous surfactant formulation.

9. The process according to any of claims 1 to 8, wherein the process constitutes Winsor type III microemulsion flooding, the interfacial tension between water and oil being less than 0.1 mN/m.

10. The process according to claim 9, wherein the interfacial tension is less than 0.01 mN/m.

11. An aqueous surfactant formulation for mineral oil production, comprising at least one anionic surfactant and at least one further surfactant, wherein the surfactant mixture at least comprises
(A) at least one surfactant (A) of the general formula
R¹-O-(CH₂-CH-(CH₃)O)ₓ-(CH₂-CH₂O)_{y}-SO₃M,
in which
• R¹ is a straight-chain or branched aliphatic and/or aromatic hydrocarbon radical having 8 to 32 carbon atoms,
• M is H⁺ and/or a k-valent counterion ¹/ₓ Y^{x+},
• x is a number from 4 to 30, and
• y is a number from 0 to 30,
• and the sum x + y is ≤ 50,
the surfactant (A) being obtainable by sulfation of an alkoxylated alcohol R¹-O-(CH₂-CH-(CH₃)O)ₓ-(CH₂-CH₂O)_{y}-H having a polydispersity M_{w}/Mₙ < 1.05, obtainable by alkoxylation of an alcohol R₁-OH using double metal cyanide catalysts or double hydroxide clays, and
(B) at least one surfactant (B) differing therefrom and of the general formula R²-Y, in which R² is a straight-chain or branched aliphatic and/or aromatic hydrocarbon radical having 8 to 32 carbon atoms and Y is a hydrophilic group,
the weight ratio (A)/(B) being from 10 : 1 to 1 : 20, and the proportion of the surfactants (A) and (B) together being at least 50% by weight, based on the amount of all surfactants in the surfactant mixture used.

12. The aqueous surfactant formulation according to claim 11, wherein the total concentration of all surfactants together is from 0.05 to 5% by weight, based on the total amount of the aqueous surfactant formulation.

## Revendications

1. Procédé pour l'extraction de pétrole, dans lequel on injecte dans un gisement pétrolifère par au moins un puits d'injection une composition aqueuse de tensioactifs comprenant au moins un tensioactif anionique et au moins un autre tensioactif et on extrait le pétrole brut du gisement par au moins un puits de production, **caractérisé en ce que** le mélange de tensioactifs au moins comprend
(A) au moins un tensioactif (A) de formule générale
R¹-O-(CH₂-CH-(CH₃)O)ₓ-(CH₂-CH₂O)_{y}-SO₃M,
dans laquelle
• R¹ représente un radical hydrocarboné aliphatique à chaîne droite ou ramifiée et/ou aromatique ayant de 8 à 32 atomes de carbone,
• M représente H⁺ et/ou un ion opposé k-valent ¹/ₖ Y^{k+},
• x représente un nombre valant de 4 à 30, et
• y représente un nombre valant de 0 à 30,
• et la somme x + y est ≤ 50,
le tensioactif (A) pouvant être obtenu par sulfatation d'un alcool alcoxylé R¹-O-(CH₂-CH-(CH₃)O)ₓ-(CH₂-CH₂O)_{y}-H ayant une polydispersité M_{w}/Mₙ < 1,05, pouvant être obtenu par alcoxylation d'un alcool R¹-OH avec utilisation de catalyseurs de type cyanure bimétallique ou d'argiles à hydroxyde double, et
(B) au moins un tensioactif (B) différent de celui-ci, de formule générale R²-Y, R² représentant un radical hydrocarboné aliphatique à chaîne droite ou ramifiée et/ou aromatique ayant de 8 à 32 atomes de carbone et Y représentant un groupe hydrophile,
le rapport pondéral (A)/(B) valant de 10 : 1 à 1 : 20, et la proportion des tensioactifs (A) et (B) ensemble valant au moins 50 % en poids par rapport à la quantité de tous les tensioactifs dans le mélange de tensioactifs utilisé.

2. Procédé selon la revendication 1, **caractérisé en ce que** R¹ consiste en un radical hydrocarboné aliphatique linéaire, et x représente un nombre valant de 4 à 30.

3. Procédé selon la revendication 1, **caractérisé en ce que** R¹ consiste en un radical hydrocarboné aliphatique ramifié, et x représente un nombre valant de 4 à 30.

4. Procédé selon l'une quelconque des revendications 1 à 3, **caractérisé en ce que** le groupe Y du tensioactif (B) consiste en un groupe choisi dans le groupe des groupes sulfate, des groupes sulfonate, des groupes polyoxyalkylène, des groupes polyoxyalkylène à modification anionique, des groupes bétaïne, des groupes glucosidiques ou des groupes oxyde d'amine.

5. Procédé selon l'une quelconque des revendications 1 à 3, caractérisé en ce le tensioactif (B) consiste en un tensioactif anionique.

6. Procédé selon l'une quelconque des revendications 1 à 3, **caractérisé en ce que** le tensioactif (B) consiste en un tensioactif choisi dans le groupe des alkyléthoxylates, le groupe polyéther du tensioactif comprenant chaque fois de 2 à 40 unités éther.

7. Procédé selon l'une quelconque des revendications 1 à 3, **caractérisé en ce que** le tensioactif (B) consiste en au moins un tensioactif choisi dans le groupe des alkylbenzènesulfonates, oléfinesulfonates ou paraffinesulfonates.

8. Procédé selon l'une quelconque des revendications 1 à 7, **caractérisé en ce que** la concentration totale de tous les tensioactifs ensemble vaut de 0,05 à 5 % en poids, par rapport à la quantité totale de la composition aqueuse de tensioactifs.

9. Procédé selon l'une quelconque des revendications 1 à 8, caractérisé en ce pour ce qui concerne le procédé, il s'agit d'injection de microémulsion de type Winsor III, la tension interfaciale entre eau et huile étant inférieure à 0,1 mN/m.

10. Procédé selon la revendication 9, **caractérisé en ce que** la tension interfaciale est inférieure à 0,01 mN/m.

11. Composition aqueuse de tensioactifs pour l'extraction de pétrole, comprenant au moins un tensioactif anionique et au moins un autre tensioactif, **caractérisé en ce que** le mélange de tensioactifs au moins comprend
(A) au moins un tensioactif (A) de formule générale
R¹-O-(CH₂-CH-(CH₃)O)ₓ-(CH₂-CH₂O)_{y}-SO₃M,
dans laquelle
• R¹ représente un radical hydrocarboné aliphatique à chaîne droite ou ramifiée et/ou aromatique ayant de 8 à 32 atomes de carbone,
• M représente H⁺ et/ou un ion opposé k-valent ¹/ₓ Y^{x+},
• x représente un nombre valant de 4 à 30, et
• y représente un nombre valant de 0 à 30,
• et la somme x + y est ≤ 50,
le tensioactif (A) pouvant être obtenu par sulfatation d'un alcool alcoxylé R¹-O-(CH₂-CH-(CH₃)O)ₓ-(CH₂-CH₂O)_{y}-H ayant une polydispersité M_{w}/Mₙ < 1,05, pouvant être obtenu par alcoxylation d'un alcool R₁-OH avec utilisation de catalyseurs de type cyanure bimétallique ou d'argiles à hydroxyde double, et
(B) au moins un tensioactif (B) différent de celui-ci, de formule générale R²-Y, R représentant un radical hydrocarboné aliphatique à chaîne droite ou ramifiée et/ou aromatique ayant de 8 à 32 atomes de carbone et Y représentant un groupe hydrophile,
le rapport pondéral (A)/(B) valant de 10 : 1 à 1 : 20, et la proportion des tensioactifs (A) et (B) ensemble valant au moins 50 % en poids par rapport à la quantité de tous les tensioactifs dans le mélange de tensioactifs utilisé.

12. Composition aqueuse de tensioactifs selon la revendication 11, **caractérisée en ce que** la concentration totale de tous les tensioactifs ensemble vaut de 0,05 à 5 % en poids, par rapport à la quantité totale de la composition aqueuse de tensioactifs.
